# EUROPÄISCHE PATENTSCHRIFT

(11) **EP 2 666 574 B1**
(45) Veröffentlichungstag und Bekanntmachung des Hinweises auf die Patenterteilung: **02.01.2019**
(21) Anmeldenummer: 13168713.9
(22) Anmeldetag: 22.05.2013
(51) Int. Cl.: B23K 9/173, B23K 9/09, B23K 9/12, B23K 9/23, B23K 35/00, F28D 7/00

(54) **Verfahren zur Herstellung einer stoffschlüssigen Verbindung**
Method for forming a strong connection
Procédé de fabrication d'une liaison par matériau interposé

(30) Priorität: 22.05.2012 DE 102012208558
(43) Veröffentlichungstag der Anmeldung: 27.11.2013
(73) Patentinhaber: MAHLE Behr GmbH & Co. KG, 70469 Stuttgart (DE)
(72) Erfinder: Werz, Michael, 72800 Eningen (DE); Ignjatovic, Dipl.-Ing. Spasoje, 75428 Illingen (DE); Kölblin, Dr.-Ing. Rüdiger, 73732 Esslingen (DE); Bonnert, Klaus, verstorben (DE); Felber, Stefan, 71701 Schwieberdingen (DE)
(74) Vertreter: Grauel, Andreas

(56) Entgegenhaltungen:
- DE-A1-102010 021 359
- DE-C- 862 651
- DE-C2- 3 926 830
- US-A1- 2009 013 676
- US-A1- 2010 005 833

## Beschreibung

### Technisches Gebiet

Die Erfindung betrifft ein Verfahren zur Herstellung einer stoffschlüssigen Verbindung von einem ersten Bauteil aus Edelstahl und einem zweiten Bauteil aus Aluminium oder einer Aluminiumlegierung.

Des Weiteren betrifft die Erfindung einen Wärmeübertrager mit einer stoffschlüssigen Verbindung zwischen einem Gehäuse und zumindest einem Rohrboden, insbesondere ein Rohrbündelwärmeübertrager zur Kühlung von Abgasen eines Verbrennungsmotors, mit einer Vielzahl von ein erstes Fluid führenden Rohren, welche in ihren Endbereichen im Rohrboden aufgenommen sind, mit einem Gehäuse, welches die Rohre umgibt, wobei das Gehäuse von einem zweiten Fluid durchströmbar und die Rohre von dem zweiten Fluid umströmbar sind, wobei der Rohrboden so in dem Gehäuse eingesetzt ist, dass ein erster das erste Fluid führender Kanal von einem zweiten das zweite Fluid führenden Kanal abgedichtet ist.

### Stand der Technik

Aus der US 2010/005833 A1 ist ein Verfahren bekannt zur Herstellung einer stoffschlüssigen Verbindung von einem ersten Bauteil aus Edelstahl und einem zweiten Bauteil aus Aluminium oder einer Aluminiumlegierung, wobei die folgenden Schritte ausgeführt werden:- Beschichten des Edelstahlbauteils mit einer Aluminiumschicht,-Anordnung des mit der Aluminiumschicht beschichteten Edelstahlbauteils und des Aluminiumbauteils bzw. des Aluminiumlegierungsbauteils derart zueinander, dass Teilbereiche des ersten und des zweiten Bauteils parallel zueinander angeordnet sind und entweder flächig aneinander anliegen oder mit einem Spalt von 0 mm bis 3 mm zueinander angeordnet sind,- stoffschlüssiges Verbinden des beschichteten Edelstahlbauteils mit dem Bauteil aus Aluminium bzw. aus einer Aluminiumlegierung.
Aus der US 2009/013676 ist ein Wärmeübertrager bekannt, mit einem Gehäuse und zumindest einem Rohrboden, insbesondere ein Rohrbündelwärmeübertrager zur Kühlung von Abgasen eines Verbrennungsmotors, mit einer Vielzahl von ein erstes Fluid führenden Rohren, welche in ihren Endbereichen in jeweils einem Rohrboden aufgenommen sind, mit einem Gehäuse, welches die Rohre umgibt, wobei das Gehäuse von einem zweiten Fluid durchströmbar und die Rohre von dem zweiten Fluid umströmbar sind, wobei die Rohrböden so in dem Gehäuse eingesetzt sind, dass ein erster das erste Fluid führender Kanal von einem zweiten das zweite Fluid führenden Kanal abgedichtet ist, wobei das Gehäuse im Wesentlichen aus Edelstahl besteht, und die Rohrböden und die Vielzahl an das erste Fluid führende Rohren im Wesentlichen aus Aluminium bestehen.

Im heutigen Stand der Technik werden Abgaswärmeübertrager oft vollständig aus Edelstahl gefertigt. Dies ist den hohen Anforderungen hinsichtlich der Abgastemperaturen und den korrosiven Eigenschaften der Abgase geschuldet. Edelstahlwärmeübertrager dieser Art werden heute durch Schweißverfahren, wie etwa das Laser- oder MAG-Schweißen gefügt.

Alternativ werden Wärmeübertrager aus Kombinationen von Edelstahl und Aluminium nach dem Stand der Technik über geschraubte Flanschverbindungen, also über formschlüssige Verbindungen erzeugt, da es bisher durch Nutzung der bekannten thermischen Fügeverfahren, wie etwa dem MIG/MAG-Schweißen oder dem Cold-Metal-Transfer-Verfahren nicht möglich war, Aluminium mit Edelstahl stoffschlüssig zu verbinden.

Dies macht unter anderem zusätzliche Bauteile, wie etwa Dichtungen notwendig, außerdem sind hierdurch die Anforderungen hinsichtlich der Toleranzlagen der Bauteile besonders hoch, um eine fluiddichte Verbindung der Komponenten zu gewährleisten.

Aus technischen Gründen ist die stoffschlüssige Verbindung von Aluminium und Edelstahl für den Einsatz in Wärmeübertragern zunehmend erforderlich, weshalb es notwendig ist, ein Verfahren zum stoffschlüssigen Fügen von Aluminium- und Edelstahlkomponenten bereitzustellen.

Hierfür ist am Stand der Technik insbesondere nachteilig, dass bisher kein geeignetes Verfahren zur stoffschlüssigen Verbindung von Aluminium- und Edelstahlbauteilen verfügbar ist.

### Darstellung der Erfindung, Aufgabe, Lösung, Vorteile

Daher ist es die Aufgabe der vorliegenden Erfindung, ein Verfahren bereitzustellen, welches es ermöglicht, stoffschlüssige Verbindungen zwischen Edelstahl und Aluminium oder Aluminiumlegierungen herzustellen.

Die Aufgabe der vorliegenden Erfindung wird durch ein Verfahren mit den Merkmalen gemäß Anspruch 1 gelöst. Vorteilhafte Weiterbildungen der vorliegenden Erfindung sind in den Unteransprüchen beschrieben.

Vorteilhaft ist es, wenn zur Herstellung einer stoffschlüssigen Verbindung von einem ersten Bauteil aus Edelstahl und einem zweiten Bauteil aus Aluminium oder einer Aluminiumlegierung die folgenden Schritte ausgeführt werden:
▪ Beschichten des Edelstahlbauteils mit einer Nickelschicht,
▪ Beschichten des mit der Nickelschicht beschichteten Edelstahlbauteils mit einer Aluminiumschicht,
▪ Anordnung des mit der Nickelschicht und der Aluminiumschicht beschichteten Edelstahlbauteils und des Aluminiumbauteils, bzw. des Aluminiumlegierungsbauteils derart zueinander, dass Teilbereiche des ersten und des zweiten Bauteils parallel zueinander angeordnet sind und entweder flächig aneinander anliegen oder mit einem Spalt von 0 mm bis 5 mm zueinander angeordnet sind,
▪ stoffschlüssiges Verbinden des beschichteten Edelstahlbauteils mit dem Bauteil aus Aluminium bzw. aus einer Aluminiumlegierung durch den Einsatz des Cold-Metal-Transfer-Verfahrens oder des MIG-Verfahrens.

Der Einsatz des Cold-Metal-Transfer-Verfahrens ermöglicht es, die beiden Werkstoffe sehr präzise miteinander zu verbinden. Dabei entsteht an den beteiligten Bauteilen nur ein sehr geringer Wärmeeintrag, was hinsichtlich der Weiterbearbeitung vorteilhaft ist. Außerdem ist aufgrund des hohen möglichen Verfahrenstempos eine gute Anwendbarkeit in der großindustriellen Fertigung gegeben. Eine große Spaltüberbrückbarkeit ermöglicht es, Bauteile mit größeren Toleranzen mit dem Verfahren zu verbinden.

Auch vorteilhaft ist es, wenn die Aluminiumschicht direkt auf die Nickelschicht aufgebracht wird. Hierdurch entsteht eine zweilagige Beschichtung auf der Edelstahloberfläche, die vorteilhaft für die Durchführung des Cold-Metal-Transfer-Verfahrens ist und das Herstellen einer dauerhaften stoffschlüssigen Verbindung begünstigt.

Weiterhin ist es vorteilhaft, wenn die Nickelbeschichtung und/oder die Aluminiumbeschichtung des Edelstahlbauteils durch Galvanisieren erzeugt wird. Durch das Galvanisieren können unterschiedliche Schichtdicken erzeugt werden, die eine gute Verbindung zu den Trägerflächen aufweisen. Dadurch können die Schichten gut an den geplanten Verwendungszweck angepasst werden.

Auch vorteilhaft ist es, wenn die Bauteile das Gehäuse und ein Rohrboden eines Wärmeübertragers sind. Durch die stoffschlüssige Verbindung zwischen dem Rohrboden und dem Gehäuse, welche erzeugt wird, wird das Gehäuse nach außen hin abgedichtet, wodurch ein zweiter Strömungskanal innerhalb des Gehäuses gebildet wird.

Außerdem zu bevorzugen ist ein Wärmeübertrager mit einer stoffschlüssigen Verbindung zwischen einem Gehäuse und zumindest einem Rohrboden, insbesondere ein Rohrbündelwärmeübertrager zur Kühlung von Abgasen eines Verbrennungsmotors, mit einer Vielzahl von ein erstes Fluid führenden Rohren, welche in ihren Endbereichen in jeweils einem Rohrboden aufgenommen sind, mit einem Gehäuse, welches die Rohre umgibt, wobei das Gehäuse von einem zweiten Fluid durchströmbar und die Rohre von dem zweiten Fluid umströmbar sind, wobei die Rohrböden so in dem Gehäuse eingesetzt sind, dass ein erster das erste Fluid führender Kanal von einem zweiten das zweite Fluid führenden Kanal abgedichtet ist, wobei das Gehäuse im Wesentlichen aus Edelstahl besteht, und die Rohrböden und die Vielzahl an das erste Fluid führende Rohren im Wesentlichen aus Aluminium oder einer Aluminiumlegierung bestehen.

Es ist vorteilhaft, wenn die Verbindung zwischen dem Gehäuse und den Rohrböden stoffschlüssig durch ein thermisches Fügeverfahren erzeugt wird. Hierdurch wird sichergestellt, dass die Verbindung eine ausreichend große Dichtwirkung aufweist, so dass auf zusätzliche Dichtmaßnahmen verzichtet werden kann.

Gemäß einer alternativen Ausführungsform ist es zu bevorzugen, wenn das Gehäuse an den Stoßstellen mit dem Rohrboden, welche an den Endbereichen des Gehäuses angeordnet sind mit einer Nickelschicht und einer Aluminiumschicht beschichtet ist. Die Beschichtung des Gehäuses aus Edelstahl unterstützt die Verbindung mit dem Aluminiumwerkstoff und hilft so ein besseres Verbindungsergebnis zu erhalten.

Außerdem ist es vorteilhaft, wenn das Gehäuse mit dem Rohrboden im Inneren des Gehäuses miteinander stoffschlüssig verbunden ist. Durch das stoffschlüssige Verbinden des Rohrbodens mit dem Gehäuse im Inneren des Gehäuses ist die Verbindung an sich einfacher darzustellen, da die Rohrböden in ihrer Form der Innenkontur des Gehäuses nachempfunden sind.

### Kurze Beschreibung der Zeichnungen

Im Folgenden wird die Erfindung anhand eines Ausführungsbeispiels unter Bezugnahme auf die Zeichnung detailliert erläutert. In der Zeichnung zeigen:
- Fig.1: eine perspektivische Ansicht eines Wärmeübertragers, insbesondere eines Rohrbündelwärmeübertragers,
- Fig. 2: einen Detailausschnitt der Verbindungsstelle zwischen dem Gehäuse und dem Rohrboden, und
- Fig. 3: ein Flussdiagramm, welches die einzelnen Verfahrensschritte verdeutlicht.

### Bevorzugte Ausführung der Erfindung

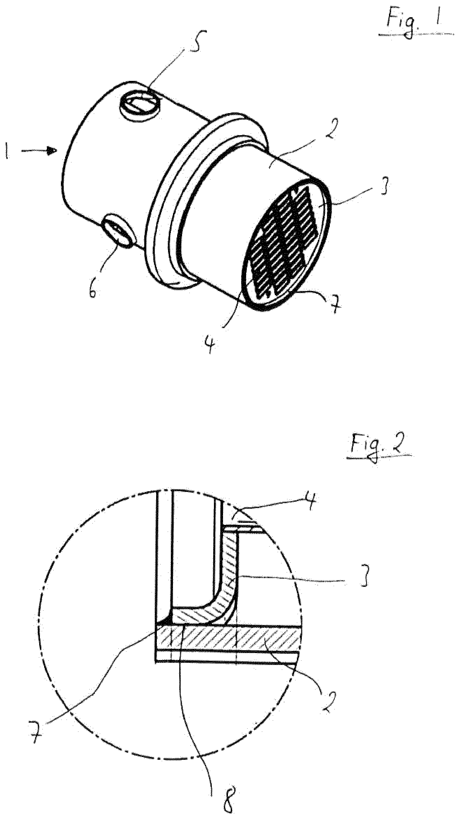

Die Figur 1 zeigt eine perspektivische Ansicht eines Wärmeübertragers 1. Der abgebildete Wärmeübertrager 1 ist insbesondere ein Rohrbündelwärmeübertrager, der im Wesentlichen aus dem Gehäuse 2 besteht. Im Inneren des Gehäuses 2 sind mehrere Rohre 4 angeordnet durch welche ein erstes Fluid den Wärmeübertrager 1 durchströmen kann. Diese Rohre 4 sind an ihren beiden Endbereichen in Rohrböden 3 aufgenommen.

Die Rohrböden 3 sind an beiden Enden des Wärmeübertragers 1 mit dem Gehäuse 2 verbunden. Im hier gezeigten Beispiel sind die Rohrböden 3 mit der Innenfläche des Gehäuses 2 verschweißt. Die Schweißnaht 7 verläuft umlaufend entlang des Rohrbodens 3 an der Innenfläche des Gehäuses 2.

Das Gehäuse 2 des Wärmeübertragers 1 weist weiterhin eine Kühlmitteleintrittsöffnung 6 sowie eine Kühlmittelaustrittsöffnung 5 auf. Durch diese beiden Öffnungen kann das Gehäuse 2 mit einem weiteren zweiten Fluid durchströmt werden, wobei die im Inneren des Gehäuses 2 befindlichen Rohre 4 mit dem Fluid umströmt werden.

In der Figur 1, nicht dargestellt, sind weitere Anschlusselemente, die seitlich am Gehäuse 2 des Wärmeübertragers 1 angebracht sein können, um das erste Fluid, welches durch die Rohre 4 im Inneren des Gehäuses 2 strömt, dem Gehäuse 2 zuzuleiten beziehungsweise vom Gehäuse 2 abzuleiten.

Der in Figur 1 gezeigte Wärmeübertrager 1 besteht im Wesentlichen aus zwei Werkstoffen. Das Gehäuse 2 des Wärmeübertragers 1 besteht im Wesentlichen aus einem Edelstahl. Die Rohrböden 3 sowie die in den Rohrböden aufgenommenen Rohre 4 bestehen aus Aluminium oder einer Aluminiumlegierung. Die Ausführung der Rohrböden 3 und der Rohre 4 aus Aluminium bzw. einer Aluminiumlegierung dient der Gewichtsreduktion des Gesamtsystems des Wärmeübertragers 1.

Die Figur 2 zeigt eine Detailansicht der Stoßstelle 8, welche sich zwischen den Rohrböden 3 und dem Gehäuse 2 ergibt. Es ist zu erkennen, dass der Rohrboden 3 insbesondere in einem der Endbereiche des Gehäuses 2 angeordnet ist. Wie bereits bei Figur 1 erwähnt, ist der Rohrboden 3 mit dem Gehäuse 2 umlaufend an der Innenfläche des Gehäuses 2 verschweißt. Im Schnitt der Figur 2 ist die Schweißnaht 7 deutlich zu erkennen.

Im hier gezeigten Beispiel ist der Rohrboden 3 nahe dem Endbereich des Gehäuses 2 in flächigem Kontakt positioniert. In alternativen Ausführungsformen ist jedoch eine Positionierung des Rohrbodens 3 mehr zur Mitte des Wärmeübertragers 1 beziehungsweise des Gehäuses 2 denkbar, insbesondere für einen ausreichenden Kantenversatz, der den Raum für die Schweißnaht 7 bildet und/oder den Wärmeeintrag minimiert.

Ebenso ist der Rohrboden 3 in der hier gezeigten Darstellung frei im Inneren des Gehäuses 2 positioniert. In anderen Ausführungsformen ist es ebenso denkbar, dass das Gehäuse 2 an der Innenseite eine umlaufende Kante oder einen Absatz aufweist, an welchem der Rohrboden 3 angeordnet wird.

Das Cold-Metal-Transfer-Verfahren sowie das MIG-Schweiß-Verfahren können auch einen gewissen Spalt zwischen den beiden miteinander zu verbindenden Bauteilen überbrücken. Es ist in alternativen Ausführungsformen also ebenfalls denkbar, dass der Rohrboden mit dem Gehäuse nicht in flächigem Kontakt zueinander angeordnet ist, bevor der Rohrboden mit dem Gehäuse verbunden wird, sondern ein Spalt von ungefähr 0 mm bis zu etwa 3 mm dazwischen existiert.

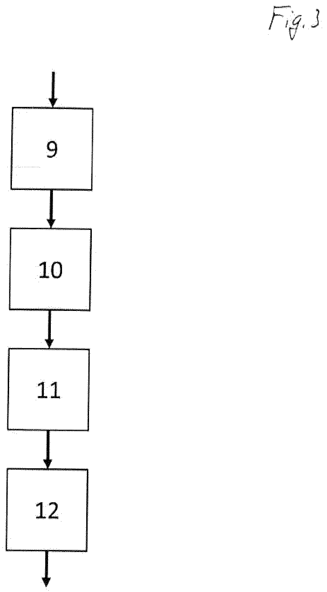

Die Figur 3 zeigt ein Flussdiagramm mit vier Verfahrensschritten 9, 10, 11, 12 zur Verdeutlichung des Verfahrens zur Verbindung von Edelstahl und Aluminium bzw. Aluminiumlegierungen. Für die Verbindung des Rohrbodens 3 mit dem Gehäuse 2 ist im erfindungsgemäßen Ausführungsbeispiel das Cold-Metal-Transfer-Verfahren vorgesehen. Um mittels des Cold-Metal-Transfer-Verfahrens Aluminiumwerkstoffe oder Aluminiumlegierungen mit Edelstahl verbinden zu können, muss die Edelstahlkomponente vorbehandelt werden.

Aus diesem Grund weist das Gehäuse 2 im inneren Bereich der Stoßstelle 8 und besonders im Bereich der Schweißnaht 7 eine Beschichtung auf.

Hierzu wird in einem ersten Verfahrensschritt 9 die Edelstahlkomponente mit einer Nickelschicht beaufschlagt. Dies geschieht vorzugsweise in dem Bereich, in dem später auch die Verbindung entstehen soll. Ein Erstrecken der beschichteten Fläche darüber hinaus ist jedoch auch denkbar.

In einem zweiten Verfahrensschritt 10 wird auf das Edelstahlbauteil, auf welches im ersten Verfahrensschritt 9 bereits eine Nickelschicht aufgetragen wurde, eine Aluminiumschicht aufgetragen. Auch diese ist vorzugsweise auf den Bereich, an dem die Verbindung zwischen dem Edelstahl und Aluminiumteil entsteht beschränkt, und die Aluminiumschicht ist dabei direkt auf die im ersten Verfahrensschritt 9 aufgetragene Nickelschicht aufgebracht. Das Gehäuse 2 weist dann nach den ersten und zweiten Verfahrensschritten 9, 10 zwei übereinanderliegende Schichten auf.

Die beiden eben beschriebenen Schichten lassen sich zweckmäßigerweise zum Beispiel durch galvanische Behandlung auf die Innenfläche des Gehäuses 2 aufbringen.

In einem dritten Verfahrensschritt 11 folgt dann nach erfolgter Beschichtung der Innenfläche des Gehäuses 2 das Positionieren des mit Nickel und Aluminium beschichteten Edelstahlbauteils relativ zum Aluminium bzw. Aluminiumlegierungsbauteil. Die Anordnung des mit der Nickelschicht und der Aluminiumschicht beschichteten Edelstahlbauteils und des Aluminiumbauteils bzw. des Aluminiumlegierungsbauteils zueinander erfolgt derart, dass sie stirnseitig einen Kantenversatz aufweist. Der Kantenversatz bildet den Raum für die Schweißnaht 7 und minimiert den Wärmeeintrag.

Im Falle des dargestellten Ausführungsbeispiels werden also die Rohrböden 3 mit den aufgenommenen Rohren 4 im Inneren des Gehäuses positioniert.

In einem vierten Verfahrensschritt 12 folgt dann die stoffschlüssige Verbindung des Edelstahlbauteils mit dem Aluminium bzw. Aluminiumlegierungsbauteil mittels des Cold-Metal-Transfer-Verfahrens,

Alternativ zur Anwendung des Cold-Metal-Transfer-Verfahrens ist es denkbar, ein MIG-Schweißverfahren zu verwenden. Hierzu wird die Innenfläche des Gehäuses 2 ebenso vorbehandelt wie für die Anwendung des Cold-Metal-Transfer-Verfahrens.

## Patentansprüche

1. Verfahren zur Herstellung einer stoffschlüssigen Verbindung von einem ersten Bauteil (2) aus Edelstahl und einem zweiten Bauteil (3) aus Aluminium oder einer Aluminiumlegierung, wobei die folgenden Schritte ausgeführt werden:
▪ Beschichten des Edelstahlbauteils (2) mit einer Nickelschicht,
▪ Beschichten des mit der Nickelschicht beschichteten Edelstahlbauteils (2) mit einer Aluminiumschicht,
▪ Anordnung des mit der Nickelschicht und der Aluminiumschicht beschichteten Edelstahlbauteils (2) und des Aluminiumbauteils (3) bzw. des Aluminiumlegierungsbauteils (3) derart zueinander, dass Teilbereiche des ersten und des zweiten Bauteils (2, 3) parallel zueinander angeordnet sind und entweder flächig aneinander anliegen oder mit einem Spalt von 0 mm bis 3 mm zueinander angeordnet sind,
▪ stoffschlüssiges Verbinden des beschichteten Edelstahlbauteils (2) mit dem Bauteil (3) aus Aluminium bzw. aus einer Aluminiumlegierung durch den Einsatz des Cold-Metal-Transfer-Verfahrens oder des MIG-Verfahrens.

2. Verfahren nach Anspruch 1, **dadurch gekennzeichnet, dass** die Aluminiumschicht direkt auf die Nickelschicht aufgebracht wird.

3. Verfahren nach Anspruch 1 oder 2, **dadurch gekennzeichnet, dass** die Nickelbeschichtung und/oder die Aluminiumbeschichtung des Edelstahlbauteils (2) durch Galvanisieren erzeugt wird.

4. Verfahren nach einem der vorhergehenden Ansprüche, **dadurch gekennzeichnet, dass** die Bauteile das Gehäuse (2) und ein Rohrboden (3) eines Wärmeübertragers (1) sind.

5. Wärmeübertrager (1) mit einer stoffschlüssigen Verbindung zwischen einem Gehäuse (2) und zumindest einem Rohrboden (3), insbesondere ein Rohrbündelwärmeübertrager zur Kühlung von Abgasen eines Verbrennungsmotors, mit einer Vielzahl von ein erstes Fluid führenden Rohren (4), welche in ihren Endbereichen in jeweils einem Rohrboden (3) aufgenommen sind, mit einem Gehäuse (2), welches die Rohre (4) umgibt, wobei das Gehäuse (2) von einem zweiten Fluid durchströmbar und die Rohre (4) von dem zweiten Fluid umströmbar sind, wobei die Rohrböden (3) so in dem Gehäuse (2) eingesetzt sind, dass ein erster das erste Fluid führender Kanal von einem zweiten das zweite Fluid führenden Kanal abgedichtet ist, wobei das Gehäuse (2) im Wesentlichen aus Edelstahl besteht, und die Rohrböden (3) und die Vielzahl an das erste Fluid führende Rohren (4) im Wesentlichen aus Aluminium oder einer Aluminiumlegierung bestehen, **dadurch gekennzeichnet, dass** zur Herstellung der stoffschlüssigen Verbindung zwischen dem Gehäuse (2) und dem zumindest einen Rohrboden (3), die folgenden Schritte ausgeführt werden:
▪ Beschichten des Gehäuses (2) mit einer Nickelschicht,
▪ Beschichten des mit der Nickelschicht beschichteten Gehäuses (2) mit einer Aluminiumschicht,
▪ Anordnung des mit der Nickelschicht und der Aluminiumschicht beschichteten Gehäuses (2) und des zumindest einen Rohrbodens (3) derart zueinander, dass Teilbereiche des Gehäuses (2) und des zumindest einen Rohrbodens (3) parallel zueinander angeordnet sind und entweder flächig aneinander anliegen oder mit einem Spalt von 0 mm bis 3 mm zueinander angeordnet sind,
▪ stoffschlüssiges Verbinden des beschichteten Gehäuses (2) mit dem zumindest einen Rohrboden (3) durch den Einsatz des Cold-Metal-Transfer-Verfahrens oder des MIG-Verfahrens.

6. Wärmeübertrager (1) nach Anspruch 5, **dadurch gekennzeichnet, dass** das Gehäuse (2) an den Stoßstellen (8) mit dem Rohrboden (3), welche an den Endbereichen des Gehäuses (2) angeordnet sind, mit einer Nickelschicht und einer Aluminiumschicht beschichtet ist.

7. Wärmeübertrager (1) nach einem der Ansprüche 5 und 6, **dadurch gekennzeichnet, dass** das Gehäuse (2) mit dem Rohrboden (3) im Inneren des Gehäuses (2) miteinander stoffschlüssig verbunden ist.

## Claims

1. A process for producing an integral bond between a first component (2) made of high-grade steel and a second component (3) made of aluminium or an aluminium alloy, wherein the following steps are carried out:
- coating of the high-grade steel component (2) with a nickel layer,
- coating of the high-grade steel component (2) coated with the nickel layer with an aluminium layer,
- arranging the high-grade steel component (2) coated with the nickel layer and the aluminium layer and the aluminium component (3) or the aluminium alloy component (3) in relation to one another in such a manner that partial regions of the first and of the second component (2, 3) are arranged parallel to one another and either bear areally against one another or are arranged with a gap of 0 mm to 3 mm in relation to one another,
- integral bonding of the coated high-grade steel component (2) to the component (3) made of aluminium or of an aluminium alloy by using the cold metal transfer process or the MIG process.

2. The process according to claim 1, **characterised in that** the aluminium layer is applied directly to the nickel layer.

3. The process according to claim 1 or 2, **characterised in that** the nickel coating and/or the aluminium coating of the high-grade steel component (2) is produced by galvanisation.

4. The process according to one of the preceding claims, **characterised in that** the components are the housing (2) and a tube plate (3) of a heat exchanger (1).

5. A heat exchanger (1) with an integral bond between a housing (2) and at least one tube plate (3), in particular a tube-bundle heat exchanger for cooling exhaust gases from an internal combustion engine, having a multiplicity of tubes (4) which conduct a first fluid and are accommodated in their end regions each in a tube plate (3), and having a housing (2) which surrounds the tubes (4), wherein a second fluid can flow through the housing (2) and the second fluid can flow around the tubes (4), wherein the tube plates (3) are inserted in the housing (2) in such a manner that a first duct conducting the first fluid is sealed off from a second duct conducting the second fluid, wherein the housing (2) consists essentially of high-grade steel, and the tube plates (3) and the multiplicity of tubes (4) conducting the first fluid consist essentially of aluminium or an aluminium alloy, **characterised in that**,
in order to produce the integral bond between the housing (2) and the at least one tube plate (3), the following steps are carried out:
- coating of the housing (2) with a nickel layer,
- coating of the housing (2) coated with the nickel layer with an aluminium layer,
- arranging the housing (2) coated with the nickel layer and the aluminium layer and the at least one tube plate (3) in relation to one another in such a manner that partial regions of the housing (2) and the at least one tube plate (3) are arranged parallel to one another and either bear areally against one another or are arranged with a gap of 0 mm to 3 mm in relation to one another,
- integral bonding of the coated housing (2) to the at least one tube plate (3) by using the cold metal transfer process or the MIG process.

6. The heat exchanger (1) according to claim 5, **characterised in that** the housing (2) is coated with a nickel layer and an aluminium layer at the joints (8) with the tube plate (3) which are arranged at the end regions of the housing (2).

7. The heat exchanger (1) according to one of claims 5 and 6, **characterised in that** the housing (2) and the tube plate (3) are integrally bonded to one another in the interior of the housing (2).

## Revendications

1. Procédé de fabrication d'un assemblage, par continuité de matière, d'un premier composant (2) en acier spécial et d'un second composant (3) en aluminium ou constitué d'un alliage d'aluminium, où l'on effectue les étapes suivantes qui consistent :
- à recouvrir le composant en acier spécial (2) d'une couche de nickel,
- à recouvrir d'une couche d'aluminium, le composant en acier spécial (2) recouvert de la couche de nickel,
- à agencer le composant en acier spécial (2) recouvert de la couche de nickel et de la couche d'aluminium, et le composant en aluminium (3) ou le composant (3) constitué d'un alliage d'aluminium, l'agencement de ces composants l'un par rapport à l'autre étant réalisé de manière telle, que des zones partielles du premier et du second composant (2, 3) soient disposées entre elles de façon parallèle et qu'elles viennent en appui, à plat sur une grande étendue, les unes contre les autres, ou bien qu'elles soient disposées en ayant un interstice allant de 0 mm à 3 mm les unes par rapport aux autres,
- à réaliser l'assemblage, par continuité de matière, du composant en acier spécial recouvert (2), avec le composant (3) en aluminium ou constitué d'un alliage d'aluminium, par l'utilisation du procédé de transfert de métal à froid ou par l'utilisation du procédé MIG.

2. Procédé selon la revendication 1, **caractérisé en ce que** la couche d'aluminium est appliquée directement sur la couche de nickel.

3. Procédé selon la revendication 1 ou 2, **caractérisé en ce que** le revêtement de nickel et / ou le revêtement d'aluminium du composant en acier spécial est produit par galvanisation.

4. Procédé selon l'une quelconque des revendications précédentes, **caractérisé en ce que** les composants sont le boîtier (2) et un plateau à tubes (3) d'un échangeur de chaleur (1).

5. Echangeur de chaleur (1) comprenant un assemblage par continuité de matière réalisé entre un boîtier (2) et au moins un plateau à tubes (3), en particulier un échangeur de chaleur à faisceau tubulaire servant au refroidissement de gaz d'échappement d'un moteur à combustion interne, ledit échangeur de chaleur comprenant une multiplicité de tubes (4) guidant un premier fluide, tubes qui sont logés à chaque fois, dans leurs zones d'extrémités, dans un plateau à tubes (3), comprenant un boîtier (2) qui entoure les tubes (4), où le boîtier (2) peut être traversé par un deuxième fluide, et les tubes (4) peuvent être baignés par le deuxième fluide, où les plateaux à tubes (3) sont introduits dans le boîtier (2) de manière telle, qu'un premier conduit acheminant le premier fluide soit rendu étanche par un deuxième conduit acheminant le deuxième fluide, où le boîtier (2) est essentiellement en acier spécial, et les plateaux à tubes (3) et la multiplicité des tubes (4) guidant le premier fluide sont essentiellement en aluminium ou constitués d'un alliage d'aluminium,
**caractérisé en ce que**, pour la fabrication de l'assemblage par continuité de matière réalisé entre le boîtier (2) et le plateau à tubes (3) au moins au nombre de un, l'on effectue les étapes suivantes qui consistent :
- à recouvrir le boîtier (2) d'une couche de nickel,
- à recouvrir d'une couche d'aluminium, le boîtier (2) recouvert de la couche de nickel,
- à agencer le boîtier (2) recouvert de la couche de nickel et de la couche d'aluminium, et le plateau à tubes (3) au moins au nombre de un, l'agencement de l'un par rapport à l'autre étant réalisé de manière telle, que des zones partielles du boîtier (2) et du plateau à tubes (3) au moins au nombre de un soient disposées entre elles de façon parallèle, et qu'elles viennent en appui, à plat sur une grande étendue, les unes contre les autres, ou bien qu'elles soient disposées en ayant un interstice allant de 0 mm à 3 mm les unes par rapport aux autres,
- à réaliser l'assemblage, par continuité de matière, du boîtier recouvert (2), avec le plateau à tubes (3) au moins au nombre de un, par l'utilisation du procédé par transfert de métal à froid ou par l'utilisation du procédé MIG.

6. Echangeur de chaleur (1) selon la revendication 5, **caractérisé en ce que** le boîtier (2), au niveau des points de jonction (8) avec le plateau à tubes (3), est recouvert d'une couche de nickel et d'une couche d'aluminium, lesdits points de jonction étant disposés au niveau des zones d'extrémités du boîtier (2).

7. Echangeur de chaleur (1) selon l'une des revendications 5 et 6, **caractérisé en ce que** le boîtier (2) est combiné avec le plateau à tubes (3) en formant l'un avec l'autre un assemblage par continuité de matière à l'intérieur du boîtier (2).
